(19) Europäisches Patentamt / European Patent Office / Office européen des brevets

(11) **EP 2 701 438 B1**

(12) **EUROPEAN PATENT SPECIFICATION**

(45) Date of publication and mention
of the grant of the patent:
**17.06.2015 Bulletin 2015/25**

(51) Int Cl.:
***H04W 52/24*** *(2009.01)*

(21) Application number: **12306019.6**

(22) Date of filing: **24.08.2012**

(54) **A method for coordination of transmissions from base stations, and network devices therefor**

Verfahren zur Koordinierung von Übertragungen von Basisstationen sowie Netzwerkvorrichtungen dafür

Procédé pour la coordination de la transmission à partir de stations de base et dispositifs de réseau correspondants

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.02.2014 Bulletin 2014/09**

(73) Proprietor: **ALCATEL LUCENT**
**92100 Boulogne-Billancourt (FR)**

(72) Inventors:
• **Stanze, Oliver**
**70499 Stuttgart (DE)**
• **Doetsch, Uwe**
**74392 Freudental (DE)**
• **Bakker, Hajo**
**71735 Eberdingen (DE)**

(74) Representative: **Kleinbub, Oliver et al**
**Alcatel-Lucent Deutschland AG**
**Intellectual Property & Standards**
**Lorenzstrasse 10**
**70435 Stuttgart (DE)**

(56) References cited:
**WO-A1-2010/124725     WO-A1-2012/085661**

• **ZHENWEI WANG ET AL: "A novel downlink power control scheme in LTE heterogeneous network", COMPUTATIONAL PROBLEM-SOLVING (ICCP), 2011 INTERNATIONAL CONFERENCE ON, IEEE, 21 October 2011 (2011-10-21), pages 241-245, XP032027733, DOI: 10.1109/ICCPS.2011.6089792 ISBN: 978-1-4577-0602-8**

**Description**

**Field of the invention**

The invention relates to a method for coordination of transmissions from a first and at least one further base station, and base stations and user terminals adapted to perform said method.

**Background**

In heterogeneous network (HetNet) scenarios using standards like e.g. Third Generation Partnership Project Long Term Evolution (3GPP LTE) standard, so-called pico base stations with their pico cells are placed under the coverage of a so-called macro base station. A pico base station typically covers a small area e.g. in buildings, train stations or aircrafts or outside due to its lower power, whereas a macro base station covers a larger area than a pico base station, as e.g. an outdoor area. Pico base stations enable a densification of cellular wireless networks, by adding additional capacity to places where it is needed.

Heterogeneous networks often apply the concept of cell range extension (CRE) to increase the overall system performance, as e.g. spectral efficiency or cell-border throughput. In case of cell range extension, a preferably cell-specific bias is applied to each pico cell. User terminals are still served by pico cells as long as the received signal of the macro cell does not exceed the received signal of the pico cell by more than the bias value. So user terminals served by a pico base station might operate at a negative signal to interference and noise ratio (SINR) which may result in performance problems on control and data channels, as on the physical downlink control channels (PDCCH) and the physical downlink shared channels (PDSCH). To avoid these problems, in the standard 3GPP LTE Rel. 10 the so-called concept of enhanced inter-cell interference-coordination (eICIC) is introduced. In case of eICIC, the macro base station sends a predefined number of so-called almost blank subframes (ABS) during an also predefined ABS period, which only contain reference symbols. The sending of almost blank subframes by the macro base station results in a significantly reduced interference for user terminals served by the pico base station, especially for those user terminals which are affected by the cell range extension, a.k.a. cell-border user terminals, and therefore are operating at a negative SINR level. This is exploited by the pico base station scheduler by preferably scheduling its cell-border user terminals to the almost blank subframes of the corresponding macro cell. Due to the missing macro cell interference in the almost blank subframes, the cell-border user terminals normally do not have performance problems on PDCCH and PDSCH. Cell-inner user terminals of the pico base station may be scheduled to almost blank subframes or non almost blank subframes, i.e. subframes others than almost blank subframes.

**Summary**

The current LTE standard has no strict definition for the realization of almost blank subframes. In general almost blank subframes mainly comprise pilots, which are sent with full power to ensure backward compliance for LTE Release 8/9 user terminals. Otherwise channels like PDCCH and PDSCH are completely blanked in almost blank subframes. This reduces the interference in almost blank subframes for user terminals served by a pico base station, which can be exploited by corresponding scheduling mechanisms.

However, as PDCCH and PDSCH carry no information, this approach results in a reduced downlink capacity in a macro cell. Additionally the uplink capacity in a macro cell is reduced, as the PDCCH in downlink subframe n contains the uplink signaling for uplink subframe n+4. If the PDCCH in subframe n is not sent, the uplink subframe n+4 will be empty, with the exception of retransmissions and semi-persistent allocations.

The object of the invention is thus to propose a method for coordination of transmissions from base stations with an improved resource usage, i.e. with an improved data throughput, and at the same time with a still acceptable signal quality for all user terminals.

In the international patent application WO 2012/085661 A1, a method and corresponding base stations in a HetNet are disclosed for adaptive power configuration. Some specific sub-frames of a serving base station are scheduled to service victim UEs, while the corresponding subframes of an aggressor base station can be scheduled to serve its UEs with adaptively adjusting the transmit power instead of thoroughly muting. This adaptive power configuration scheme can efficiently reduce the interference in HetNets to guarantee the workability of victim UEs. In an embodiment, the victim UEs report their interference situation information to the serving base station, the serving base station transfers the interference situation information of the victim UEs to the aggressor base station, and the aggressor base station calculates its possible maximum transmit power on the specific subframes.

A basic idea of embodiments of the invention is to apply as an alternative for the complete blanking of PDSCH and PDCCH the usage of a significant reduced transmit power in the macro cell for almost blank subframes. Pilots still have to be transmitted with full power, therefore for LTE Release 8/9 user terminals the applied modulation for the allocations on PDCCH and PDSCH is preferably Quadrature Phase Shift Keying (QPSK) to enable a user terminal in the macro cell to handle the different transmit powers without dedicated signalization. In LTE Release 10 there are dedicated pilots, so independent of the applied transmit power any Modulation and Coding Scheme (MCS) might be used for LTE Release 10 user terminals on the PDSCH.

The problem of this approach is the determination of a suitable transmit power in the macro cell for almost blank subframes. Compared to the complete blanking of PDCCH and PDSCH there will be a higher interference for user terminals in the pico cell in almost blank subframes. Thus, it has to be ensured, that the transmit power reduction on PDCCH and PDSCH in the almost blank subframes in the macro cell is high enough, so that even the user terminals in the pico cell which are located at the border of the extended pico cell and the macro cell, are able to receive PDCCH and PDSCH of the pico cell in almost blank subframes, even if they are operating at a significant negative Signal to Interference and Noise Ratio (SINR) in non-almost blank subframes.

Thus, according to a basic idea of embodiments of the invention, a macro base station applies, preferably in almost blank subframes, a reduced transmit power $P_{ABS}$. Thereby the reduced transmit power $P_{ABS}$ is selected in a way that although there is additional macro interference compared to completely blanked almost blank subframes, a certain service level for user terminals served by the pico cell which are located at the border of an extended pico cell and a macro cell is guaranteed in almost blank subframes, e.g. a certain SINR which guarantees the usage of the PDCCH with aggregation level 8 at acceptable error rate. The usage of this reduced transmit power in almost blank subframes enables the macro base station to allocate resources on PDCCH and PDSCH in almost blank subframes for user terminals served by the macro cell with acceptable channel conditions. This increase the DL and UL capacity of the system.

The object is thus achieved by a method for coordination of transmissions from a first base station and at least one further base station according to claim 1.

The object of the invention is furthermore achieved by a base station for coordination of transmissions from said base station and at least on further base station according to claim 9.

The invention is described in the following within the framework of 3GPP LTE, however as the invention is not restricted to 3GPP LTE, but can in principle be applied in other networks that need to coordinate transmissions from base stations, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

## Brief description of the figures

In the following the invention will be explained further making reference to the attached drawings.

Fig. 1 schematically shows a communication network in which the invention can be implemented.

Fig. 2 schematically shows a macro base station and a pico base station in which the invention can be implemented with the coverage areas of the respective cells and a bias based cell range extension of the pico cell.

Fig. 3 schematically shows the structure of a user terminal and a base station in which the invention can be implemented.

Fig. 4 schematically shows a message sequence chart for transmit power adjustment of a base station triggered by another base station according to background art useful for understanding the invention.

Fig. 5 schematically shows a message sequence chart for transmit power adjustment of a base station based on a signal quality evaluation in the base station according to an embodiment of the invention.

## Description of the embodiments

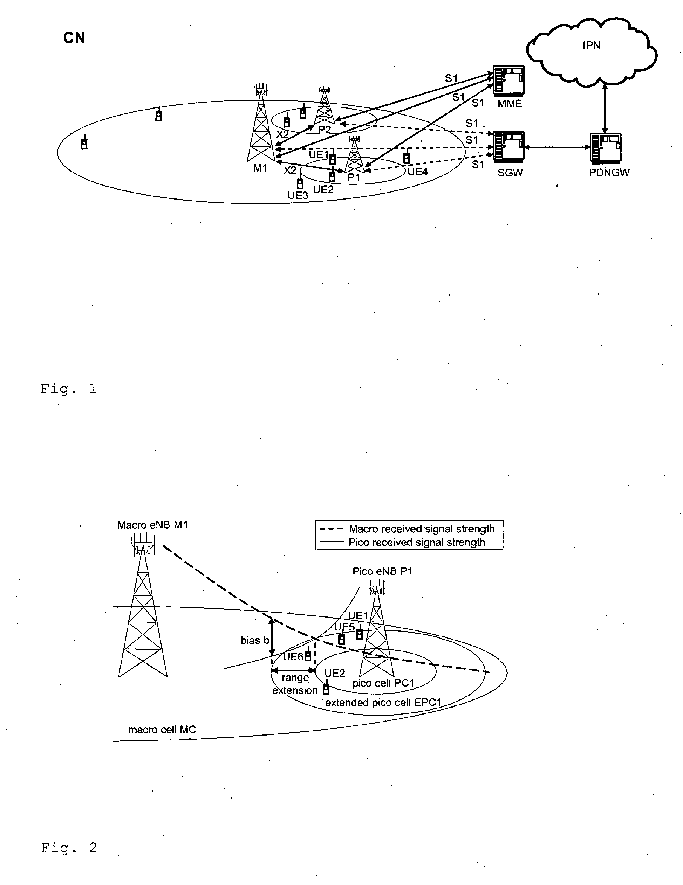

Fig. 1 shows as an example of a communication network in which the invention can be implemented a communication network CN according to the standard 3GPP LTE.

Said communication network CN comprises a macro base station M1, a first and a second pico base station P1 and P2, user terminals UE1-UE4, a serving gateway SGW, a packet data network gateway PDNGW, and a mobility management entity MME.

The user terminals UE1 and UE2 are connected via radio connections to the first pico base station P1, and the user terminals UE3 and UE4 are connected via radio connections to the macro base stations M1. In future evolutions of LTE, each of the user terminals UE3 and UE4 could also be connected via radio connections to multiple macro base stations. The macro base station M1 is in turn connected to the serving gateway SGW and to the mobility management entity MME, i.e. to the evolved packet core (EPC), via the so-called S1 interface. In the same way, the pico base stations P1 and P2 are connected to the serving gateway SGW and to the mobility management entity MME.

The macro base station M1 and the pico base stations P1 and P2 are connected among each other via the so-called X2 interface. The macro base station M1 and the pico base stations P1 and P2 can be connected among each other via radio connections or via fixed line connections.

The serving gateway SGW is connected to the packet data network gateway PDNGW, which is in turn connected to an external IP network IPN.

The S1 interface is a standardized interface between the macro base station M1 or one of the pico base stations P1 and P2, i.e. an eNodeB in this example, and the Evolved Packet Core (EPC). The S1 interface has two flavours, S1-MME for exchange of signalling messages between one of the macro or pico base station M1, P1, P2 and the mobility management entity MME and S1-U for the transport of user datagrams between one of the macro or pico base station M1, P1, P2 and the serving gateway SGW.

The X2 interface is added in 3GPP LTE standard primarily in order to transfer the user plane signal and the control plane signal during handover.

The serving gateway SGW performs routing of the IP user data between the macro base station M1 and the pico base stations P1 and P2 respectively, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal UE1-UE4 and the respective serving macro base station M1 or pico base station P1, P2.

The mobility management entity MME performs tasks of the subscriber management and the session management, and also performs the mobility management during handover between different access networks.

The pico base stations P1 and P2 and the related coverage area of the pico cells are placed under the coverage area of the macro base station M1. Thus, the downlink transmission from the macro base station M1 is the dominating source of interference on the downlink transmission to the user terminals UE1 and UE2 served by the pico base station P1.

Fig. 2 schematically shows the macro base station M1 and the pico base station P1 from fig. 1 in more detail with the coverage areas of the respective cells and a bias based cell range extension of the pico cell.

As already mentioned above, heterogeneous networks often apply the concept of cell range extension (CRE) to increase the overall system performance, as e.g. spectral efficiency or cell-border throughput. In case of cell range extension, a preferably cell-specific bias is applied to each pico cell. User terminals can still be served by pico cells as long as the received signal strength of the macro cell does not exceed the received signal strength of the pico cell by more than the bias value. So user terminals served by a pico base station might operate at a negative signal to interference and noise ratio (SINR) which may result in performance problems on control and data channels, as on the physical downlink control channels (PDCCH) and the physical downlink shared channels (PDSCH).

In fig. 2, it is shown, that a coverage area of the pico cell PC1 is extended to an extended coverage area of the pico cell EPC1 in which the received signal strength of the macro cell does not exceed the received signal strength of the pico cell by more than the bias value b.

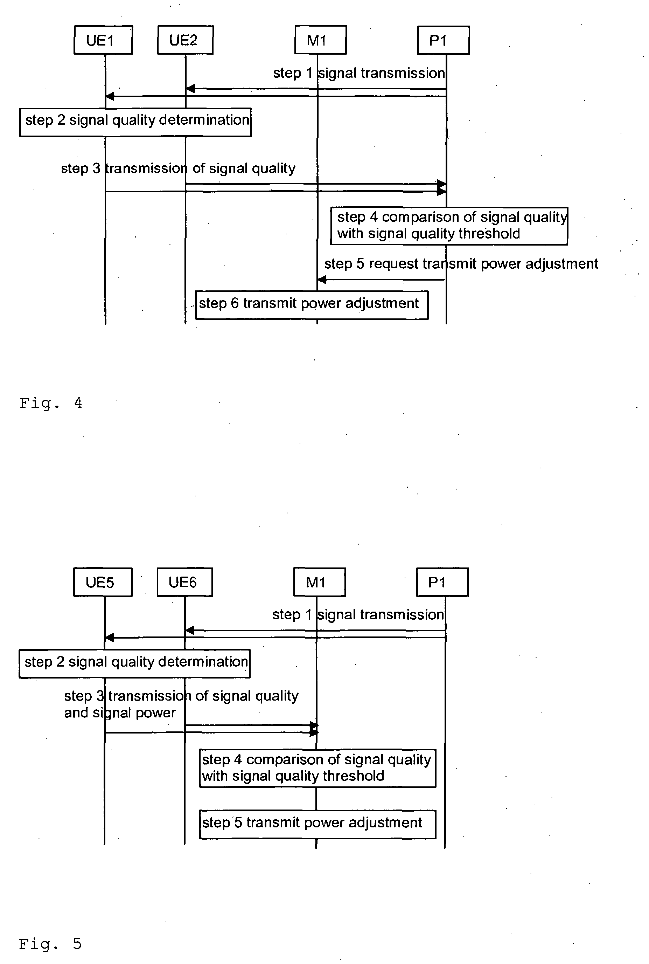

In the embodiment depicted in fig. 2, the user terminals UE1 and UE2 in the extended coverage area of the pico cell EPC1 are served by the pico base station P1, whereas the user terminals UE5 and UE6 in the extended coverage area of the pico cell EPC1 are served by the macro base station M1, which will be used in an embodiment of the invention described below under fig. 5.

According to embodiments of the invention, methods for coordination of transmissions from the macro base station M1 and the pico base station P1 with an improved data throughput and at the same time with a still acceptable signal quality for all user terminals are proposed, which will be described below e.g. under fig. 5.

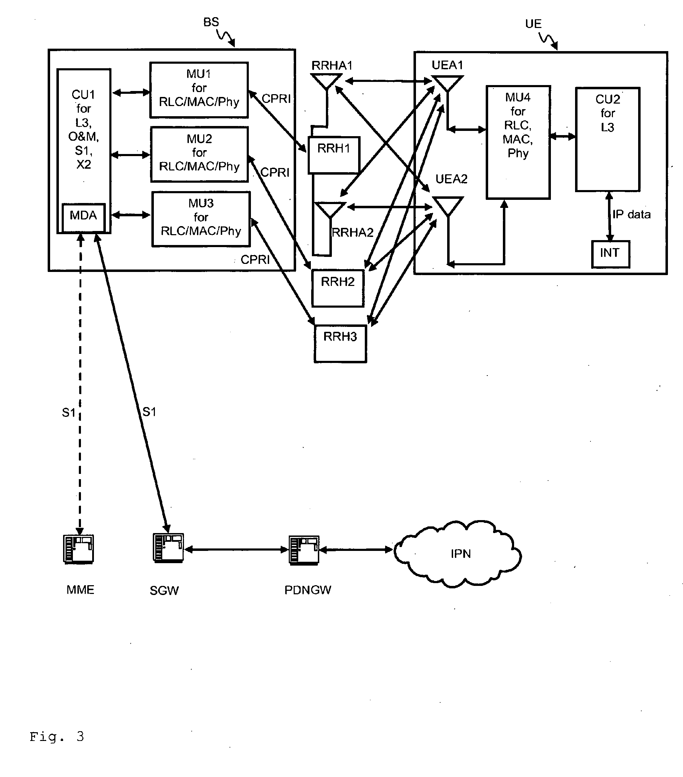

Fig. 3 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 3 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

In the sequel, methods for coordination of transmission from the macro base station M1 and the pico base stations P1 and P2 as e.g. depicted in fig. 1 with an improved data throughput and a stable system configuration are described according to embodiments of the invention. Said methods for coordination of transmission from the macro base station M1 and the pico base stations P1 and P2 are based on finding an appropriate value for the transmit power in the macro cell for almost blank subframes.

Fig. 4 schematically shows a message sequence chart for transmit power adjustment of a base station triggered by another base station according to background art useful for understanding the invention.

Fig. 4 shows the transmission of messages between the pico base station P1, the macro base station M1, and the user terminals UE1 and UE2 served by the pico base station P1 as e.g. depicted in fig. 2. In the embodiment, the macro base station M1 starts transmitting on PDCCH and/or PDSCH in almost blank subframes, or a fraction of the almost blank subframes, using an initial value for a transmit power $P_{ABS}$ which may be based on the applied bias or configured, e.g. by Operation and Maintenance (O&M).

The pico base station P1 transmits signals, as e.g. reference signals, to the user terminals UE1 and UE2 (step 1). Then the user terminals UE1 and UE2 perform signal quality measurements e.g. by measuring the Signal to Interference and Noise Ratio $SINR_{pico}$ of the signals (step 2). The signal qualities of the two user terminals UE1 and UE2 are transmitted from the two user terminals UE1 and UE2 to the pico base station P1 e.g. by transmission of the respective Signal to Interference and Noise Ratio $SINR_{pico}$, or a respective wideband Channel Quality Indicator (CQI) (step 3).

Then, the pico base station P1 compares the signal qualities, as e.g. the Signal to Interference and Noise Ratios $SINR_{pico}$, with a signal quality threshold, as e.g. a target Signal to Interference and Noise Ratio $SINR_{pico,target}$ (step 4). The target Signal to Interference and Noise Ratio $SINR_{pico,target}$ is chosen in such a way that it guarantees the usage of the PDCCH, e.g. with an aggregation level of 8, with an acceptable error rate in the pico cell.

If the signal quality, e.g. the Signal to Interference and Noise Ratio $SINR_{pico}$, of at least one of the user terminals UE1 and UE2 decreases below the target Signal to Interference and Noise Ratio $SINR_{pico,target}$ or, even worse, if there are an increased number of radio link failures higher than a threshold value, the applied value for the transmit power $P_{ABS}$ in almost blank subframes of the macro base station M1 is too high. In this case the pico base station P1 sends a message via X2 to the macro base station M1 requesting from the macro base station M1 that the applied value for the transmit power $P_{ABS}$ in almost blank subframes has to be decreased (step 5). Then the macro base station M1 will apply a reduced value for the transmit power $P_{ABS}$ in almost blank subframes (step 6).

The above-described process is repeated until the transmit power $P_{ABS}$ converged to a suitable value leading to the Signal to Interference and Noise Ratios $SINR_{pico}$ of the user terminals UE1 and UE2 being higher than the target Signal to Interference and Noise Ratio $SINR_{pico,target}$.

If the signal quality, e.g. the Signal to Interference and Noise Ratio $SINR_{pico}$, of both user terminals UE1 and UE2 is higher than the target Signal to Interference and Noise Ratio $SINR_{pico,target}$, the applied value for the transmit power $P_{ABS}$ in almost blank subframes of the macro base station M1 can be increased. In this case the pico base station P1 sends a message via X2 to the macro base station M1 indicating to the macro base station M1 that the applied value for the transmit power $P_{ABS}$ in almost blank subframes can be increased (step 5). Then the macro base station M1 can decide to apply an increased value for the transmit power $P_{ABS}$ in almost blank subframes (step 6) .

In an alternative of the embodiment, the initial value for the transmit power $P_{ABS}$ in almost blank subframes of the macro base station M1 is zero.

The step size for decreasing or increasing the transmit power $P_{ABS}$ in almost blank subframes of the macro base station M1 can be predefined e.g. to a fix value or a certain percentage of the initially applied transmit power $P_{ABS}$.

Another possibility to determine an appropriate transmit power $P_{ABS}$ in almost blank subframes of the macro base station M1 is to exploit certain user terminals served by the macro base station M1 as user terminals for measuring signal qualities. In case of LTE the network fully controls the handover (HO) of the user terminals from one base station to another base station. So, it is possible to delay a handover for certain user terminals served by the macro base station M1 to the pico base station P1. Although the handover to the pico base station P1 is delayed, the user terminals can still be served by the macro base station M1 in non-almost blank subframes, as due to bias-based cell range extension, the received signal from the macro base station M1 is still significant higher than the received signal of the pico base station P1. So, the exploitation of certain user terminals served by the macro base station M1 as measurement user terminals does not have a negative impact on the service quality for said user terminals. The advantage of the delayed handover is that the corresponding user terminal served by the macro base station M1 now can report measurements to the macro base station M1 which corresponds to the conditions of user terminals served by the pico base station P1 at the border of the extended pico cell EPC1 and the macro cell MC.

Thus, by means of using user terminals served by the macro base station M1 as measurement user terminals, the impact of the applied value of the transmit power $P_{ABS}$ in almost blank subframes of the macro base station M1 can be determined. The macro base station M1 will configure the user terminals served by the macro base station M1 to perform e.g. so-called Reference Signal Received Quality (RSRQ) measurements for the corresponding pico base station P1. In comparison to so-called Reference Signal Received Power (RSRP) measurements, RSRQ measurements not only reflect the pathloss from the pico base station P1 to the user terminals UE5 and UE6, but also the interference from neighboring macro and pico base stations and the noise. So these RSRQ measurements can be mapped to a SINR value and therefore can be used to find a suitable value for the transmit power $P_{ABS}$ in almost blank subframes of the macro base station M1.

This may be done directly, by computing the impact of the transmit power $P_{ABS}$ on the SINR value assuming a constant signal power of the pico base station P1, a constant noise, and a constant interference of other base stations, or incrementally by applying a certain transmit power $P_{ABS}$ value and analyzing the impact on the RSRQ measurement values and adapting said transmit power $P_{ABS}$ value until an appropriate value is found.

Fig. 5 schematically shows a message sequence chart for such a transmit power adjustment of a base station based on a signal quality evaluation in the base station according to an embodiment of the invention.

Fig. 5 shows the transmission of messages between the pico base station P1, the user terminals UE5 and UE6 served by the macro base station M1 and located in a coverage area (EPC1) of the pico cell P1, and the macro base station M1 as e.g. depicted in fig. 2. In the embodiment, the macro base station M1 starts transmitting on PDCCH and/or PDSCH in almost blank subframes, or a fraction of the almost blank subframes, using an initial value for a transmit power $P_{ABS}$ which may be based on the applied bias or configured, e.g. by Operation and Maintenance (O&M).

The pico base station P1 transmits signals, as e.g. reference signals, to the user terminals UE5 and UE6 (step 1). Then the user terminals UE5 and UE6 perform signal quality measurements e.g. by measuring the RSRQ value of reference signals (step 2). The RSRQ values and the RSRP values of the two user terminals UE5 and UE6 are transmitted from the two user terminals UE5 and UE6 to the macro base station M1 (step 3).

Then, the macro base station M1 determines the Signal to Interference and Noise Ratio $SINR_{pico}$ in the pico cell P1 based on the RSRQ values and the RSRP values of the two user terminals UE5 and UE6 according to the following formula:

$$\frac{S_{pico}}{S_{pico}/(S_{pico}+I+N)} = \frac{RSRP_{pico}}{RSRQ_{pico}} ; \qquad (1)$$

$$\Rightarrow SINR_{pico} = \frac{RSRQ_{pico} \times S_{pico}}{RSRP_{pico} - RSRQ_{pico} \times S_{pico}} ; \qquad (2)$$

In these formulae $S_{pico}$ is the received signal power of signals in the pico cell P1, as e.g. user data signals transmitted from the pico base station P1, $RSRP_{pico}$ is the Reference Signal Received Power in the pico cell measured by the user terminal UE5 or UE6, $RSRQ_{pico}$ is the Reference Signal Received Quality in the pico cell measured by the user terminal UE5 or UE6, I represents the total interference, and N represents the noise. As the correlation between $RSRP_{pico}$ and $S_{pico}$ is known in the macro base station M1, the Signal to Interference and Noise Ratio $SINR_{pico}$ in the pico cell P1 can be calculated. Then, the macro base station M1 compares the signal qualities, as e.g. the calculated Signal to Interference and Noise Ratios $SINR_{pico}$ based on measurements of the user terminals UE5 and UE6, with a signal quality threshold, as e.g. a target Signal to Interference and Noise Ratio $SINR_{pico,target}$ (step 4).

The target Signal to Interference and Noise Ratio $SINR_{pico,target}$ is chosen in such a way that it guarantees the usage of the PDCCH, e.g. with an aggregation level of 8, with an acceptable error rate in the pico cell.

If the signal quality, e.g. the Signal to Interference and Noise Ratio $SINR_{pico}$, of at least one of the user terminals UE5 and UE6 decreases below the target Signal to Interference and Noise Ratio $SINR_{pico,target}$, the applied value for the transmit power $P_{ABS}$ in almost blank subframes of the macro base station M1 is too high. In this case the macro base station M1 decreases the transmit power $P_{ABS}$ in almost blank subframes (step 5).

The above-described process is repeated until the transmit power $P_{ABS}$ converged to a suitable value leading to the Signal to Interference and Noise Ratios $SINR_{pico}$ of the user terminals UE5 and UE6 being higher than the target Signal to Interference and Noise Ratio $SINR_{pico,target}$.

If the signal quality, e.g. the Signal to Interference and Noise Ratio $SINR_{pico}$, of both user terminals UE5 and UE6 is higher than the target Signal to Interference and Noise Ratio $SINR_{pico,target}$, the applied value for the transmit power $P_{ABS}$ in almost blank subframes of the macro base station M1 can be increased. Then the macro base station M1 will apply an increased value for the transmit power $P_{ABS}$ in almost blank subframes (step 5).

In an alternative of the embodiment, the initial value for the transmit power $P_{ABS}$ in almost blank subframes of the macro base station M1 is zero.

The step size for decreasing or increasing the transmit power $P_{ABS}$ in almost blank subframes of the macro base station M1 can be predefined e.g. to a fix value or a certain percentage of the initially applied transmit power $P_{ABS}$.

In a further alternative of the embodiment, the maximum possible transmit power $P_{ABS}$, target in almost blank subframes of the macro base station M1 that ensures the target Signal to Interference and Noise Ratio $SINR_{pico,target}$ is directly calculated based on the following formulae:

$$SINR_{pico} = \frac{S_{pico}}{(P_{ABS} - PL_{macro}) + S_{other} + N} \qquad (3)$$

$$SINR_{pico,t\arg et} = \frac{S_{pico}}{(P_{ABS,t\arg et} - PL_{macro}) + S_{other} + N} \qquad (4)$$

In these formulae $PL_{macro}$ is the pathloss for signals transmitted from the macro base station M1 and measured by the user terminals UE5 or UE6. $S_{other}$ is the received signal power of signals from neighboring cells, and N represents the noise.

The combination of equation (3) and (4) leads to the following equation for the maximum possible transmit power $P_{ABS}$, target in almost blank subframes of the macro base station M1 with the assumption that $S_{pico}$, $S_{other}$, N and $PL_{macro}$ remain unchanged:

$$P_{ABS,t\arg et} = \frac{S_{pico}}{SINR_{pico,t\arg et}} - \frac{S_{pico}}{SINR_{pico}} + P_{ABS} \qquad (5)$$

As $SINR_{pico,target}$ and the correlation between $RSRP_{pico}$ and $S_{pico}$ and between $RSRQ_{pico}$ and $SINR_{pico}$ are known in the macro base station M1, the maximum possible transmit power $P_{ABS}$, target in almost blank subframes of the macro base station M1 can be calculated directly based on said measurements of $RSRQ_{pico}$ and $SINR_{pico}$ performed in the user terminals UE5 and UE6.

$SINR_{pico,target}$, and the correlation between $RSRP_{pico}$ and $S_{pico}$ and between $RSRQ_{pico}$ and $SINR_{pico}$ can e.g. be made known to the macro base station M1 by Operation and Maintenance (O&M) or by the pico base station P1.

After a suitable value for the transmit power $P_{ABS}$ in almost blank subframes of the macro base station M1 not higher than the maximum possible transmit power $P_{ABS}$, target has been found and is applied e.g. in the embodiment described in fig. 5, PDCCH and PDSCH in almost blank subframes are used by the macro base station M1 to signal uplink and downlink allocations on PDCCH and to transmit downlink data to user terminals UE5, UE6 served by the macro base station M1 on PDSCH.

As pilot signals are still transmitted with full power from the macro base station M1, preferably QPSK has to be applied as modulation scheme for PDCCH and PDSCH for LTE Release 8/9 user terminals to avoid additional signaling overhead. For the PDCCH this is not a restriction because PDCCH only applies QPSK in LTE. The selected coding level has to consider the reduced transmit power for all data symbols in almost blank subframes. In LTE Release 10 there are dedicated pilots, so independent of the applied transmit power any MCS might be used for LTE Release 10 user terminals on the PDSCH.

For certain user terminals served by the macro base station M1, a reduced transmit power $P_{ABS}$ in almost blank subframes may require a coding level on PDCCH, a.k.a. aggregation level, or PDSCH which is more robust than the coding levels supported by LTE. In this case allocation for the corresponding user terminals served by the macro base station on PDCCH and PDSCH can only be done in non-almost blank subframes in LTE.

In a further embodiment, the macro base station M1 has multiple pico base station P1, P2 inside its coverage area. In this case the determined maximum possible transmit power $P_{ABS}$, target has to guarantee a minimum required signal quality at the border of an extended pico cell and the macro cell for all pico cells. Therefore the corresponding value for $P_{ABS}$, target will be the minimum value from the different pico cells.

In a further embodiment, multiple macro base stations have to find fitting values for the maximum possible transmit power $P_{ABS}$, target. Therefore they coordinate their determination procedures, e.g. by applying a new value for the transmit power $P_{ABS}$ in the same almost blank subframe. In so doing, a macro base station also implicitly considers the applied value for the transmit power $P_{ABS}$ in neighboring macro cells for the determination of its own value for the maximum possible transmit power $P_{ABS}$, target. The coordination between the macro base stations can be controlled by a central component, as e.g. Operation and Maintenance (O&M) or may be done by a distributed mechanism.

In a further embodiment, a transmit power $P_{ABS}$ is only applied to a certain fraction of the almost blank subframes in the macro base station M1, and in the remaining almost blank subframes, PDCCH and PDSCH are completely blanked. This enables the usage of higher values for the transmit power $P_{ABS}$ because the minimum guaranteed signal quality, i.e. service quality, at the border of an extended pico cell EPC1 and macro cell MC may be provided by the almost blank subframes in which PDCCH and PDSCH are completely blanked.

In the embodiments described above and depicted e.g. in fig. 5, the corresponding processing steps can be performed e.g. in the modem unit boards MU1-MU3 and the control unit board CU1 of the macro base station M1 and the pico base station P1, and in the modem unit board MU4 and the control unit board CU2 of the user terminals UE1, UE2, UE5, and UE6 as depicted in fig. 3 and described above.

**Claims**

1. A method for coordination of transmissions from a first base station (M1) and at least one further base station (P1, P2), wherein

   • user terminals (UE5, UE6) served by the first base station (M1) and located in an extended coverage area (EPC1) of the at least one further base station (P1) determine signal qualities of signals transmitted from the at least one further base station (P1),
   • the user terminals (UE5, UE6) served by the first base station (M1) and located in the extended coverage area (EPC1) of the at least one further base station (P1) transmit the signal qualities of signals transmitted from the at least one further base station (P1) to the first base station (M1),
   • the first base station (M1) estimates the signal qualities for user terminals (UE1, UE2) served by the at least one further base station (P1) based on the signal qualities of signals transmitted from the at least one further base station (P1)
   • and the first base station (M1) lowers the transmit power if the estimated signal qualities for the user terminals (UE1, UE2) served by the at least one further base station (P1) are lower than a signal quality threshold to come up to signal qualities for the user terminals (UE1, UE2) served by the at least one further base station (P1) being higher than the signal quality threshold.

2. A method according to claim 1, wherein the at least one further base station (P1) is at least one pico base station, and the first base station (M1) is a macro base station that has a coverage area (MC) comprising a coverage area (PC1, EPC1) of the at least one pico base station (P2).

3. A method according to claim 1 or 2, wherein said method for coordination of transmission from a first base station (M1)and at least one further base station (P1) is applied in almost blank subframes.

4. A method according to any of the preceding claims, wherein the first base station (M1) increases the transmit power if the estimated signal qualities are higher than the signal quality threshold.

5. A method according to any of the preceding claims, wherein the first base station (M1)determines an upper limit for the transmit power which results in signal qualities for the user terminals (UE1, UE2) served by the at least one further base station (P1)being equal or higher than the signal quality threshold, and adjusts the transmit power to a value not higher than said upper limit for the transmit power.

6. A method according to any of the preceding claims, wherein

   • the user terminals (UE5, UE6) served by the first base station (M1) and located in an extended coverage area (EPC1) of the at least one further base station (P1) perform reference signal received power measurements and reference signal received quality measurements,
   • the user terminals (UE5, UE6) served by the first base station (M1) and located in the extended coverage area (EPC1) of the at least one further base station (P1) transmits said reference signal received power measurements and reference signal received quality measurements to the first base station to determine said signal qualities of said signals transmitted from the at least one further base station (P1).

7. A method according to any of the preceding claims, wherein a handover of the user terminals (UE5, UE6) served by the first base station (M1) and located in the extended coverage area (EPC1) of the at least one further base station (P1) from the first base station (M1) to the at least one further base station (P1) is delayed.

8. A method according to any of the preceding claims, wherein the transmit power of said first base station (M1) is adjusted taking into account transmit powers of neighboring macro base stations which are adjusted to come to signal qualities for user terminals served by the neighboring macro base stations being higher than a signal quality threshold.

9. A base station (M1) for coordination of transmissions from said base station and at least on further base station (P1), wherein the base station (M1) is adapted to

    • receive from user terminals (UE5, UE6) served by said base station (M1) and located in an extended coverage area (EPC1) of the at least one further base station (P1) signal qualities of signals transmitted from the at least one further base station (P1),
    • estimate the signal qualities for the user terminals (UE1, UE2) served by the at least one further base station (P1) based on the signal qualities of signals transmitted from the at least one further base station (P1),
    • and lower the transmit power if the signal qualities for the user terminals (UE1, UE2) served by the at least one further base station (P1) are lower than the signal quality threshold to come up to signal qualities for the user terminals (UE1, UE2) served by the at least one further base station (P1), being higher than the signal quality threshold.

10. A communication network for mobile communication comprising at least one base station (M1) according to claim 9 and at least one user terminal (UE5, UE6) served by the at least one base station (M1), wherein the at least one user terminal (UE5, UE6) is adapted to determine signal qualities of signals transmitted from the at least one further base station (P1), and transmit the signal qualities of signals transmitted from the at least one further base station (P1) to the base station (M1) being the serving base station of the user terminal (UE5, UE6).

**Patentansprüche**

1. Verfahren für die Koordinierung von Übertragungen von einer ersten Basisstation (M1) und mindestens einer weiteren Basisstation (P1, P2), wobei

    • Benutzerendgeräte (UE5, UE6), von der ersten Basisstation (M1) bedient und in einem breiten Abdeckungsbereich (EPC1) von der mindestens einen weiteren Basisstation (P1) lokalisiert, die Signalqualitäten der von der mindestens einen weiteren Basisstation (P1) übertragenen Signale bestimmen,
    • Benutzerendgeräte (UE5, UE6), von der ersten Basisstation (M1) bedient und in einem breiten Abdeckungsbereich (EPC1) von der mindestens einen weiteren Basisstation (P1) lokalisiert, die Signalqualitäten der von der mindestens einen weiteren Basisstation (P1) übertragenen Signale zur ersten Basisstation (M1) übertragen,
    • die erste Basisstation (M1) die Signalqualitäten für die Benutzerendgeräte (UE1, UE2) abschätzt, die von der mindestens einen weiteren Basisstation (P1) basierend auf den Signalqualitäten der von der mindestens einen weiteren Basisstation (P1) übertragenen Signale bedient werden,
    • und die erste Basisstation (M1) die Sendeleistung verringert, wenn die abgeschätzten Signalqualitäten für die Benutzerendgeräte (UE1, UE2), die von der mindestens einen weiteren Basisstation (P1) bedient werden, schlechter sind als ein Signalqualitätsgrenzwert, um Signalqualitäten für die von der wenigstens einen weiteren Basisstation (P1) bedienten Benutzerendgeräte (UE1, UE2) zu erreichen, welche höher sind als die Signalqualitätsgrenze.

2. Verfahren nach Anspruch 1, wobei die mindestens eine weitere Basisstation (P1) mindestens eine Pico-Basisstation ist und die erste Basisstation (M1) eine Makro-Basisstation ist, die einen Abdeckungsbereich (MC) hat, der einen Abdeckungsbereich (PC1, EPC1) von der mindestens einen Pico-Basisstation (1) umfasst.

3. Verfahren nach Anspruch 1 oder 2, wobei besagtes Verfahren für die Koordinierung der Übertragung von einer ersten Basisstation (M1) und mindestens einer weiteren Basisstation (P1) in nahezu leeren Unterrahmen angewendet wird.

4. Verfahren nach einem beliebigen der vorstehenden Ansprüche, wobei die erste Basisstation (M1) die Sendeleistung erhöht, wenn die abgeschätzten Signalqualitäten über dem Signalqualitätsgrenzwert liegen.

5. Verfahren nach einem beliebigen der vorstehenden Ansprüche, wobei die erste Basisstation (M1) einen oberen Grenzwert für die Sendeleistung bestimmt, was zu Signalqualitäten für die Benutzerendgeräte (UE1, UE2) führt, die von der mindestens einen weiteren Basisstation (P1) bedient werden, der gleich oder höher als der Signalqualitätsgrenzwert ist, und die Sendeleistung auf einen Wert einstellt, der nicht über besagtem oberen Grenzwert für die Sendeleistung liegt.

6. Verfahren nach einem beliebigen der vorstehenden Ansprüche, wobei

   • die Benutzerendgeräte (UE5, UE6), die von der ersten Basisstation (M1) bedient werden und in einem breiten Abdeckungsbereich (EPC1) der mindestens einen weiteren Basisstation (P1) lokalisiert sind, Messungen der Leistung eines empfangenen Referenzsignals und Qualitätsmessungen eines empfangenen Referenzsignals durchführen,
   • die Benutzerendgeräte (UE5, UE6), die von der ersten Basisstation (M1) bedient werden und in dem breiten Abdeckungsbereich (EPC1) der mindestens einen weiteren Basisstation (P1) lokalisiert sind, die Messungen der Leistung besagten empfangenen Referenzsignals und die Qualitätsmessungen des empfangenen Referenzsignals zur ersten Basisstation übertragen, um besagte Signalqualitäten besagter, von der mindestens einen weiteren Basisstation (P1) übertragenen Signale zu bestimmen.

7. Verfahren nach einem beliebigen der vorstehenden Ansprüche, wobei ein Handover der Benutzerendgeräte ((UE5, UE6), die von der ersten Basisstation (M1) bedient werden und in dem breiten Abdeckungsbereich (EPC1) der mindestens einen weiteren Basisstation (P1) lokalisiert sind, von der ersten Basisstation (M1) zu der mindestens einen weiteren Basisstation (P1) verzögert ist.

8. Verfahren nach einem beliebigen der vorstehenden Ansprüche, wobei die Sendeleistung besagter erster Basisstation (M1) eingestellt wird unter Berücksichtigung der Sendeleistungen der benachbarten Makro-Basisstationen, die eingestellt werden, um Signalqualitäten für von den benachbarten Makro-Basisstationen bediente Benutzerendgeräte, zu erreichen, welche höher sind als der Signalqualitätsgrenzwert.

9. Eine Basisstation (M1) für die Koordinierung von Übertragungen von besagter Basisstation und mindestens einer weiteren Basisstation (P1), wobei die Basisstation (M1) angepasst ist,

   • um von den Benutzerendgeräten (UE5, UE6), die von besagter Basisstation (M1) bedient werden und die in einem breiten Abdeckungsbereich (EPC1) der mindestens einen weiteren Basisstation (P1) lokalisiert sind, Signalqualitäten von von der mindestens einen weiteren Basisstation (P1) übertragenen Signale zu erhalten,
   • um die Signalqualitäten für die Benutzerendgeräte (UE1, UE2), die von der mindestens einen weiteren Basisstation (P1) bedient werden, zu erhalten, basierend auf den Signalqualitäten der von der mindestens einen weiteren Basisstation (P1) übertragenen Signale.
   • und um die Sendeleistung zu verringern, wenn die Signalqualitäten für die Benutzerendgeräte (UE1, UE2), die von der mindestens einen weiteren Basisstation (P1) bedient werden, schlechter sind als der Signalqualitätsgrenzwert, um Signalqualitäten für die von der mindestens einen weiteren Basisstation (P1) bedienten Benutzerendgeräte (UE1, UE2) zu erreichen, welche höher sind als der Signalqualitätsgrenzwert.

10. Ein Kommunikationsnetzwerk für mobile Kommunikation, welches mindestens eine Basisstation (M1) gemäß Anspruch 9 und mindestens ein Benutzerendgerät (UE5, UE6) umfasst, das von der mindestens einen Basisstation (M1) bedient wird, wobei das mindestens eine Benutzerendgerät (UE5, UE6) angepasst ist, um Signalqualitäten von von der mindestens einen weiteren Basisstation (P1) übertragenen Signale zu bestimmen und die Signalqualitäten der von der mindestens einen weiteren Basisstation (P1) zur Basisstation (M1) gesendeten Signale zu übertragen, die die dienstleistende Basisstation des Benutzerendgeräts (UE5, UE6) ist.

**Revendications**

1. Procédé de coordination de transmissions entre une première station de base (M1) et au moins une station de base supplémentaire (P1, P2), dans lequel

   • des terminaux d'utilisateurs (UE5, UE6), desservis par la première station de base (M1) et situés dans une zone de couverture étendue (EPC1) de l'au moins une station de base supplémentaire (P1), déterminent des qualités de signal de signaux transmis à partir de l'au moins une station de base supplémentaire (P1),
   • des terminaux d'utilisateurs (UE5, UE6), desservis par la première station de base (M1) et situés dans la zone de couverture étendue (EPC1) de l'au moins une station de base supplémentaire (P1), transmettent les qualités de signal de signaux transmis entre l'au moins une station de base supplémentaire (P1) et la première station de base (M1),

• la première station de base (M1) estime les qualités de signal pour des terminaux d'utilisateurs (UE1, UE2) desservis par l'au moins une station de base supplémentaire (P1) sur la base des qualités de signal de signaux transmis à partir de l'au moins une station de base supplémentaire (P1),

• et la première station de base (M1) diminue la puissance de transmission si les qualités de signal estimées pour les terminaux d'utilisateurs (UE1, UE2) desservis par l'au moins une station de base supplémentaire (P1) sont inférieures à un seuil de qualité de signal pour atteindre des qualités de signal pour les terminaux d'utilisateurs (UE1, UE2) desservis par l'au moins une station de base supplémentaire (P1) qui sont supérieures au seuil de qualité de signal.

2. Procédé selon la revendication 1, dans lequel l'au moins une station de base supplémentaire (P1) est au moins une pico station de base, et la première station de base (M1) est une macro station de base qui présente une zone de couverture (MC) comprenant une zone de couverture (PC1, EPC1) de l'au moins une pico station de base (P1).

3. Procédé selon la revendication 1 ou 2, ledit procédé pour la coordination de transmission entre une première station de base (M1) et au moins une station de base supplémentaire (P1) étant appliqué dans des sous-trames presque vides.

4. Procédé selon l'une quelconque des revendications précédentes, dans lequel la première station de base (M1) augmente la puissance de transmission si les qualités de signal estimées sont supérieures au seuil de qualité de signal.

5. Procédé selon l'une quelconque des revendications précédentes, dans lequel la première station de base (M1) détermine une limite supérieure pour la puissance de transmission qui a pour résultat des qualités de signal pour les terminaux d'utilisateurs (UE1, UE2) desservis par l'au moins une station de base supplémentaire (P1) qui sont supérieures ou égales au seuil de qualité de signal, et règle la puissance de transmission sur une valeur non supérieure à ladite limite supérieure pour la puissance de transmission.

6. Procédé selon l'une quelconque des revendications précédentes, dans lequel

• les terminaux d'utilisateurs (UE5, UE6), desservis par la première station de base (M1) et situés dans une zone de couverture étendue (EPC1) de l'au moins une station de base supplémentaire (P1), effectuent des mesures de puissance reçue de signal de référence et des mesures de qualité reçue de signal de référence,

• les terminaux d'utilisateurs (UE5, UE6), desservis par la première station de base (M1) et situés dans la zone de couverture étendue (EPC1) de l'au moins une station de base supplémentaire (P1), transmettent lesdites mesures de puissance reçue de signal de référence et lesdites mesures de qualité reçue de signal de référence à la première station de base pour déterminer lesdites qualités de signal desdits signaux transmis à partir de l'au moins une station de base supplémentaire (P1).

7. Procédé selon l'une quelconque des revendications précédentes, dans lequel un transfert des terminaux d'utilisateurs (UE5, UE6), desservis par la première station de base (M1) et situés dans la zone de couverture étendue (EPC1) de l'au moins une station de base supplémentaire (P1) entre la première station de base (M1) et l'au moins une station de base supplémentaire (P1), est retardé.

8. Procédé selon l'une quelconque des revendications précédentes, dans lequel la puissance de transmission de ladite première station de base (M1) est réglée en tenant compte des puissances de transmission des macro stations de base voisines qui sont réglées pour atteindre des qualités de signal pour des terminaux d'utilisateurs desservis par les macro stations de base voisines qui sont supérieures à un seuil de qualité de signal.

9. Station de base (M1) pour la coordination de transmissions entre ladite station de base et au moins une station de base supplémentaire (P1), la station de base (M1) étant adaptée pour

• recevoir des terminaux d'utilisateurs (UE5, UE6), desservis par ladite station de base (M1) et situés dans une zone de couverture étendue (EPC1) de l'au moins une station de base supplémentaire (P1), des qualités de signal de signaux transmis à partir de l'au moins une station de base supplémentaire (P1),

• estimer les qualités de signal pour les terminaux d'utilisateurs (UE1, UE2) desservis par l'au moins une station de base supplémentaire (P1) sur la base des qualités de signal de signaux transmis à partir de l'au moins une station de base supplémentaire (P1),

• et diminuer la puissance de transmission si les qualités de signal pour les terminaux d'utilisateurs (UE1, UE2) desservis par l'au moins une station de base supplémentaire (P1) sont inférieures au seuil de qualité de signal pour atteindre des qualités de signal pour les terminaux d'utilisateurs (UE1, UE2) desservis par l'au moins une station de base supplémentaire (P1) qui sont supérieures au seuil de qualité de signal.

10. Réseau de communication pour la communication mobile comprenant au moins une station de base (M1) selon la revendication 9 et au moins un terminal d'utilisateur (UE5, UE6) desservi par l'au moins une station de base (M1), dans lequel l'au moins un terminal d'utilisateur (UE5, UE6) est adapté pour déterminer des qualités de signal de signaux transmis à partir de l'au moins une station de base supplémentaire (P1), et transmettre les qualités de signal de signaux transmis entre l'au moins une station de base supplémentaire (P1 et la station de base (M1) qui est la station de base de desserte du terminal d'utilisateur (UE5, UE6).

CN

Fig. 1

Macro eNB M1

- - - Macro received signal strength
—— Pico received signal strength

Pico eNB P1

UE1
UE5
bias b
UE6
range
extension
UE2
pico cell PC1
extended pico cell EPC1
macro cell MC

Fig. 2

Fig. 3

```
        UE1        UE2                 M1              P1
         │          │                   │              │
         │          │         step 1│signal transmission│
         │◄─────────┼───────────────────┼──────────────┤
         │          │                   │              │
   ┌─────┴──────────┴────────────┐      │              │
   │ step 2 signal quality determination│              │
   └─────┬──────────┬────────────┘      │              │
         │          │                   │              │
   step 3│transmission of signal quality │             │
         │          ├───────────────────┼─────────────►│
         ├──────────┼───────────────────┼─────────────►│
         │          │                   │   ┌──────────┴──────────────┐
         │          │                   │   │ step 4 comparison of signal quality
         │          │                   │   │ with signal quality threshold
         │          │                   │   └──────────┬──────────────┘
         │          │                   │ step 5 request transmit power adjustment
         │          │                   │◄─────────────┤
         │     ┌────┴──────────────────┐│              │
         │     │ step 6 transmit power adjustment       │
         │     └────┬──────────────────┘│              │
         │          │                   │              │
```

Fig. 4

```
        UE5        UE6                 M1              P1
         │          │                   │              │
         │          │         step 1│signal transmission│
         │◄─────────┼───────────────────┼──────────────┤
   ┌─────┴──────────┴───────────────┐   │              │
   │ step 2 signal quality determination│              │
   └─────┬──────────┬───────────────┘   │              │
   step 3│transmission of signal quality │             │
   and signal power  │                   │              │
         │          ├───────────────────►│              │
         ├──────────┼───────────────────►│              │
         │          │          ┌─────────┴──────────────┐
         │          │          │ step 4 comparison of signal quality
         │          │          │ with signal quality threshold
         │          │          └─────────┬──────────────┘
         │          │          ┌─────────┴──────────────┐
         │          │          │ step 5 transmit power adjustment
         │          │          └─────────┬──────────────┘
         │          │                   │              │
```

Fig. 5

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2012085661 A1